# EUROPÄISCHE PATENTSCHRIFT

(11) **EP 1 920 299 B1**
(45) Veröffentlichungstag und Bekanntmachung des Hinweises auf die Patenterteilung: **30.09.2009**
(21) Anmeldenummer: 06778127.8
(22) Anmeldetag: 02.08.2006
(51) Int. Cl.: G05B 19/042, G05B 23/02, G05B 19/406

(54) **VERFAHREN UND VORRICHTUNG ZUR ÜBERWACHUNG EINER TECHNISCHEN EINRICHTUNG**
METHOD AND DEVICE FOR MONITORING A TECHNICAL DEVICE
PROCEDE ET DISPOSITIF POUR SURVEILLER UN DISPOSITIF TECHNIQUE

(30) Priorität: 01.09.2005 DE 102005041632
(43) Veröffentlichungstag der Anmeldung: 14.05.2008
(73) Patentinhaber: SIEMENS AKTIENGESELLSCHAFT, 80333 München (DE)
(72) Erfinder: AYDT, Alexander, 70499 Stuttgart (DE); FEURER, Bernhard, 70499 Stuttgart (DE); PERNOZZOLI, Arno, 91322 Gräfenberg (DE)
(86) Internationale Anmeldenummer: PCT/EP2006/064978
(87) Internationale Veröffentlichungsnummer: WO 2007/025833

(56) Entgegenhaltungen:
- WO-A-02/069064
- DE-A1- 19 749 002
- US-B1- 6 298 308

## Beschreibung

Die Erfindung betrifft ein Verfahren zur Überwachung einer technischen Einrichtung. Die technische Einrichtung ist beispielsweise eine Automatisierungseinrichtung, wie z.B. eine Werkzeugmaschine, eine Produktionsmaschine oder auch ein Handhabungsautomat. Weitere Beispiele für technische Einrichtungen sind Automatisierungskomponenten wie ein Stromrichter, eine PLC (Programmable Logic Controller), eine NC-Steuerung, eine CNC-Steuerung oder dergleichen. Derartige Automatisierungskomponenten werden bei Automatisierungseinrichtungen wie z.B. Druckmaschinen oder Kunststoffspritzgießmaschinen (dies ist ein Beispiele für eine Produktionsmaschine) bzw. auch in Drehmaschinen oder Fräsmaschinen (dies ist ein Beispiel für eine Werkzeugmaschine), oder auch bei Robotern (dies ist ein Beispiel für einen Handhabungsautomaten) eingesetzt. Dies sind industrielle Maschinen.

Internet-Technologien bieten einen Weg zur Fernüberwachung und Ferndiagnose von Automatisierungseinrichtungen. Auf einer Benutzerseite ist eine systemspezifische Bedienstation, um einem Benutzer eine Fernabfrage zu ermöglichen. Eine Fernüberwachung ermöglicht z.B. einem oder mehreren Experten den Zugriff auf eine industrielle Maschine.

Nachteilig dabei ist, dass die Daten durch menschliche Arbeitskraft wie z.B. eine Expertengruppe oder durch wenigstens einen Experten auszuwerten sind. Die Auswertung umfasst beispielsweise auch Aussagen über Maßnahmen zur Fehlerbeseitigung. Meldungen, insbesondere Fehlermeldungen wenigstens einer industriellen Maschine werden z.B. zentral über eine Fernüberwachung oder lokal von Experten diagnostiziert. Über ein Human Machine Interface (HMI) erlangen die Experten Kenntnis von den Meldungen. Die Experten erhalten ihr Wissen durch Kenntnis der die Meldungen erzeugenden industriellen Maschinen. Diese Kenntnis wurde beispielsweise dadurch aufgebaut, dass die Experten wenigstens eine Fehlermeldung von einer industriellen Maschine, bereits von einer anderen gleichartigen industriellen Maschine kennen, bei der sie den Fehler durch Fehlerbeseitigungsmaßnahmen beseitigt haben. Die Fehlerbeseitigungsmaßnahmen sind den Experten nun bekannt und werden auch zur Beseitigung des Fehlers an einer anderen gleichartigen industriellen Maschine herangezogen. Kenntnisse über Fehlermeldungen und den dazugehörigen Fehlerbeseitigungsmaßnahmen ergeben sich beispielsweise auch bei der Betrachtung nur einer industriellen Maschine über einen Zeitraum hinweg.

Aus der durch Personal durchgeführten Meldungsdiagnose, welche z.B. zentralisiert aufgebaut ist und der bzw. den industriellen Maschinen, welche Meldungen erzeugen ergibt sich ein System zur Fehlerbeseitigung, da die Experten z.B. über Ferneingriffe oder lokal, bzw. auch über lokales Personal zur Fehlerbeseitigung beitragen.

Ein Verfahren zur zentralen und/oder lokalen Meldungsdiagnose mit Experten wirft jedoch viele Probleme auf wie z.B. Reaktionsschnelligkeit der Experten, Arbeitszeiten, ständige Erreichbarkeit, unterschiedliches Expertenwissen verschiedener Experten, Fremdsprachenkenntnisse und vieles mehr.

Auch aus der DE 101 52 765 A1 ist ein System bekannt, welches einen Host und einen Client aufweist, wobei durch den Client in Echtzeit Maschinenzustandsdaten erfasst werden und and den Host übertragen werden. Der Host kann mit dem Client beispielsweise über das Internet verbunden sein.

Bei einem Überwachungsverfahren kann ein Problem auch darin bestehen, dass Ursachen für eine Ausnahmesituation, wie z.B. einem Fehler, einer Störung oder dergleichen, von technischen Systemen, z.B. einer Werkzeugmaschinen, auf Basis von Diagnosewissen systemgestützt zu ermitteln ist. Dabei muss das Diagnosewissen zu einem technischen System, einer technischen Einrichtung, einer Maschine, Anlage oder dergleichen, im Folgenden zusammenfassend als technisches System bzw. technische Einrichtung bezeichnet, in dem Sinne leicht erweiterbar sein, dass zusätzliches Wissen ohne Rückwirkung auf das bereits vorhandene Wissen eingebracht werden kann.

Wenn an einer technischen Einrichtung, wie z.B. einer Steuerung, eine oder mehrere Störungen auftreten, ist diese Störung beispielsweise vom Betreiber der technischen Einrichtung oder auch vom Hersteller der technischen Einrichtung zu diagnostizieren und zu beseitigen. Die Störung wird durch die Überwachung der technischen Einrichtung erkannt. Zur Erkennung eines Fehlers, welcher eine Störung darstellt, wird z.B. der Fehler aus überwachten Signalverläufen der Steuerung erkannt, wobei vorteilhafter Weise für eine weitere Diagnose zusätzliche Daten aus der technischen Einrichtung beispielsweise durch deren Speicherung zur Verfügung gestellt werden. Die Möglichkeit zur Aufzeichnung sämtlicher für evtl. auftretende Fehler relevanter Signale mit einer z.B. nachgelagerten Erkennung der relevanten Signalzustände ist insbesondere bei komplexen technischen Einrichtungen wie z.B. bei Steuerungen in der Automatisierungstechnik kritisch, da diese im allgemeinen stark ressourcenbeschränkt sind und die aufzuzeichnenden Signaldateien sehr umfangreich würden. Die Beschränkung der Ressourcen betrifft insbesondere den verfügbaren Speicher und/oder die Rechenleistung der technischen Einrichtung. Eine Überwachung durch Beobachtung und Aufzeichnung aller Signale einer technischen Einrichtung zur nachfolgenden Verwendung für eine Fehler und/oder Störungsanalyse sprengt also in der Regel die Kapazität der technischen Einrichtung beim Speicher und bei der Rechenleistung. Aus diesem Grund wird nach dem Stand der Technik bei der Programmierung einer technischen Einrichtung eine Auswahl an überwachten Signalen getroffen. Da diese Auswahl beschränkt ist, wird es in vielen Fällen schwieriger schnell und präzise z.B. einen Fehler oder eine Störung zu erkennen. Sollen z.B. auf das Erkennen bestimmter Signalzustände (z.B. Fehlerzustände) oder deren Kombinationen hin Daten z.B. für Diagnosezwecke aus einer Steuerung beschafft werden, so müssen diese Daten ebenfalls zum Zeitpunkt der Erstellung des Automatisierungsprojektes bekannt sein. Die Datenbeschaffung erfolgt beispielsweise dann, wenn ein bestimmter vordefinierter Fehler auftritt, so dass dann beispielsweise in eine Logbuchdatei in einen besonders geschützten Bereich die Daten gespeichert werden. Diese gespeicherten Daten können dann u.U. für eine Fehlerdiagnose zur Verfügung gestellt werden. Die Fehlerdiagnose kann durch eine Person oder auch durch ein Expertensystem durchgeführt werden. Eine Aufzeichnung aller für Diagnosen notwendigen Daten ist im Allgemeinen nicht möglich, so dass die Fehlerdiagnose erschwert ist.

Wenn also Signale bzw. Daten einer Überwachung der technischen Einrichtung mit derselben Steuerung die auch den Prozess steuert und ohne Hinzufügen neuer Diagnosehardware und ohne Eingriff z.B. in einen Produktionsprozesses - insbesondere dessen Abschaltung - beschafft werden sollen, müssen die zur Überwachung notwendigen Daten bzw. Signale zur Erstellungszeit z.B. eines Automatisierungsprojektes bekannt sein und in der Software der Steuerung des Produktionsprozesses vorliegen. Dies gilt insbesondere:
- für Signale aus Quellen, bei denen nur die Auswertung in (weicher)Echtzeit Auskunft über den Fehler gibt, bzw.
- wenn genau zum Fehlerzeitpunkt bestimmte Daten aus der Steuerung beschafft werden sollen ("Zustandsabzug zum Fehlerzeitpunkt").

Letzteres ist nur direkt zum Zeitpunkt der Erkennung einer Störung möglich und kann prinzipiell nicht durch eine nachgelagerte Analyse von Signaldaten geleistet werden.

Die DE 197 49 002 A1 offenbart ein Pressenüberwachungssystem. Lokal an der Presse ist eine Überwachungseinheit mit einem Prozessor vorgesehen. Über eine Datenverbindung ist die lokale Einheit mit einer Ferneinheit verbunden, welche ebenfalls einen Prozessor aufweist. Die Ferneinheit kann die Konfiguration sowohl der Hardware als auch der Software der lokalen Einheit über das Kommunikationsnetzwerk ändern.

Die WO 02/069064 A1 offenbart einen Schaltschrank mit einer Überwachungseinrichtung für Schaltschrankfunktionen. Diese ist in Datenübertragungs-Verbindung mit einer ebenfalls in dem Schaltschrank angeordneten Serverumschalteinrichtung angebracht, welche eine Anzeigesteuereinrichtung aufweist. Die Überwachungseinrichtung ist zum Aufnehmen von über die Anzeigesteuereinrichtung eingegebenen Konfigürierungsdaten ausgebildet.

Der Erfindung liegt die Aufgabe zugrunde, ein Verfahren zur Überwachung einer technischen Einrichtung bzw. ein entsprechendes System zur Überwachung der technischen Einrichtung zu schaffen, welches eine verbesserte Überwachung der technischen Einrichtung ermöglicht.

Die Lösung der Aufgabe gelingt mittels eines Verfahrens mit den Merkmalen nach Anspruch 1.

Bei einem erfindungsgemäßen Verfahren zur Überwachung einer technischen Einrichtung wird eine Kommunikationsverbindung zwischen der technischen Einrichtung und einer Einrichtung zur Überwachungsunterstützung genutzt. Die technische Einrichtung ist beispielsweise eine Automatisierungseinrichtung oder auch eine Automatisierungskomponente. Als Kommunikationsverbindung wird beispielsweise eine Telefonleitung, eine Internetverbindung, eine Intranetverbindung, eine Ethernetverbindung oder dergleichen zumindest teilweise mit verwendet. Mit der Kommunikationsverbindung ist ein Datenaustausch zwischen der technischen Einrichtung und der Einrichtung zur Überwachungsunterstützung herstellbar. Hierfür weist die Überwachungseinrichtung und/oder die technische Einrichtung insbesondere eine Datenkommunikationseinrichtung auf. Beispiele für Datenkommunikationseinrichtungen sind eine Busverbindung, ein Modem, ein Webserver, usw. Gemäß der Erfindung ist das Verfahren derart ausgeprägt, dass die Überwachung der technischen Einrichtung konfigurierbar ist, wobei Änderungen einer Überwachungskonfiguration von der Einrichtung zur Überwachungsunterstützung an die technische Einrichtung übertragen werden, bzw. übertragbar sind. Die Übertragung erfolgt mittels der Kommunikationsverbindung. Die Einrichtung zur Überwachungsunterstützung ist beispielsweise ein Personal Computer, ein Server, eine Workstation oder dergleichen.

Die überwachte technische Einrichtung ist beispielsweise eine Automatisierungseinrichtung wie z.B. eine Werkzeugmaschine oder auch eine Produktionsmaschine. Durch die Nutzung der Kommunikationsverbindung ist es möglich beispielsweise rechenintensive und/oder speicherintensive Aufgaben der Überwachung zur Einrichtung der Überwachungsunterstützung auszulagern.

Erfindungsgemäß ist vorgesehen, dass die Einrichtung zur Überwachungsunterstützung in einer seriellen und/oder parallelen Reihenfolge mit zwei oder mehreren technischen Einrichtungen zur Ausführung einer Datenkommunikation verbunden ist, wobei die Konfigurationseinstellung, also die Überwachungskonfiguration, einer ersten technischen Einrichtung abhängig von einem Zustand einer zweiten technischen Einrichtung gewechselt wird. Meldet also beispielsweise ein Falzapparat einer Druckmaschine einen Fehler, so kann die Überwachungskonfiguration der letzten Druckeinheit speziell geändert werden, um festzustellen ob der Fehler beim Falzapparat vielleicht von der Druckeinheit herrührt.

Das erfindungsgemäße Verfahren ist derart ausbildbar, dass insbesondere im Zusammenhang mit dem Erkennen von Fehlern zur Laufzeit der technischen Einrichtung und der damit einhergehenden Gewinnung von (Diagnose-) Daten, die insbesondere auf einer Steuerung vorliegen, sowohl überwachte Signale und/oder Signalzustände, wie auch damit zu erzeugenden Daten zur Laufzeit der technischen Einrichtung konfigurierbar sind. Die Konfigurierbarkeit betrifft dabei insbesondere auch die Erzeugung von weiteren Diagnoseaktionen. Nach dem erfindungsgemäßen Verfahren sind beispielsweise Fehler, auf Grund derer z.B. Fehlermeldungen generiert wurden, leichter einzukreisen.
Nach dem Stand der Technik war es notwendig zum Einkreisen des Fehlers spezielle Änderungen z.B. an einer Automatisierungssoftware einer technischen Einrichtung durchzuführen, um beispielsweise ein Fangschaltung für die Fehlererkennung aufzubauen, wobei hierzu der bestimmungsgemäße Betrieb der technischen Einrichtung unterbrochen werden musste. Eine modifizierte Software wurde während der Betriebsunterbrechung vor Ort oder per Fernzugriff z.B. in eine Steuerung, welche die technische Einrichtung darstellt, eingespielt. Nachdem der Fehler gefunden war konnte die Steuerung in einer Betriebsunterbrechung bezüglich der Software wieder auf den Ausgangszustand zurückgerüstet werden. Diese Vorgehensweise hat den Nachteil, dass der laufende Betrieb der technischen Einrichtung unterbrochen werden muss, um die Software für die Überwachung der technischen Einrichtung zu ändern. Hierzu ist auch oftmals ein Bediener vor Ort erforderlich.

In einer vorteilhaften Ausgestaltung des erfindungsgemäßen Verfahrens wird also eine Änderung der Überwachungskonfiguration während des Betriebs der technischen Einrichtung durchgeführt.

Da während des Betriebes der technischen Einrichtung die Überwachung dieser oder auch einer weiteren technischen Einrichtung konfiguriert werden kann, lassen sich auf einfach Art und Weise verschiedene Störfallbilder abfragen. Störfallbilder lassen sich z.B. durch das Erreichen spezifischer Signalzustände durch Signale aus verschiedenen Signalquellen wie z.B. PLC's, NC's, Prozessdatenserver, usw. und deren logische Abhängigkeiten, welche beispielsweise das:
- Erreichen
- Verlassen
- Überschreiten
- Unterschreiten
eines Vergleichswertes, das gleichzeitiges Eintreten dieser Bedingungen und/oder das Eintreten dieser Bedingungen in einer definierten Sequenz zueinander charakterisieren. Sollen diese Störungen feststellbar gemacht werden, wird dazu üblicherweise ein bestimmtes Fehlerbild zum Erstellungszeitpunkt eines Automatisierungsprojektes z.B. mittels einer PLC oder NC Sprache ("Signal X = Wert 1 und Signal y > Wert 2 innerhalb von z Sekunden →Fehlermeldung 1) beschrieben und als Fehlermeldung ausgegeben. Die dadurch festgelegten Fehler können nun während des Betriebes der Anlage ohne Anhalten des Produktionsprozesses verändert werden. Das bedeutet, dass mittels einer online Konfigurationsänderung auch nach dem Zeitpunkt der Inbetriebnahme noch Fehlerzustände durch die Steuerung erkannt werden können, die erst nach dem Zeitpunkt der Erstellung eines Automatisierungsprojektes, d.h. einer entsprechenden Software, bekannt waren.

Auf einem Webserver können z.B. Überwachungskonfigurationen als Einstellungen zur Überwachung hinterlegt werden und sind dort zur Laufzeit einer Steuerung von einem Bediener erstellbar bzw. anpassbar. Die Überwachungskonfiguration ist von einer Softwarekomponente auf der Einrichtung zur Steuerung und/oder Regelung selbsttätig von einem Webserver über eine Netzwerkverbindung z.B. in Form von Skripten in einer Skriptsprache abrufbar und in der Softwarekomponente interpretierbar.

Vorteilhafter Weise kann in der Steuerung der technischen Einrichtung auch auf Zustände i.S. einer Fehlererkennung zugegriffen werden, die außerhalb der Steuerung oder der überwachten technischen Einrichtung vorliegen. Weitere Zustände der technischen Einrichtung bzw. eines technischen Prozesses, können aufgetretene Fehler transparenter machen und die Diagnose vereinfachen. Dies betrifft z.B. Daten aus einem Manufacturing Execution System (MES), einem Instandhaltungsplanungssystemen, einem Warenwirtschaftssystemen, usw. Sollten sich also weitere Signalquellen als notwendig erweisen, die zum Zeitpunkt der Erstellung der technischen Einrichtung, welche insbesondere ein Automatisierungssystem ist, noch nicht als Signalquelle durch die beschriebene technische Einrichtung verwendbar waren, so sind auch diese ohne Anhalten der technischen Einrichtung und ohne Einpflege von Software z.B. an der Steuerung als Signalquellen vorteilhaft nutzbar.

Zur Fehlerdiagnose kann beispielsweise ein Maschinenalarm herangezogen werden, der eine Konturüberwachung einer Achse betrifft wobei die Meldung eine Instandhaltungstätigkeit betrifft. So kann beispielsweise gemeldet werden, dass ein Kugelumlaufschuh der Achse nachzuspannen ist, da diese Nachspannung bereits mehr als 2 Monate überfällig ist.

Wird ein bestimmter unspezifischer Fehler in einer technischen Einrichtung wie z.B. einer Steuerung erkannt; kann es zur weiteren Einkreisung der Fehlerursache notwendig werden, in Abhängigkeit vom erkannten Fehlerbild weitere Fehlerbilder zu überwachen bzw. andere Diagnosedaten zu beschaffen. Bei unbegrenzten Ressourcen und a priori bekannten Fehlerbildern wäre es möglich, alle relevanten Signale mitzuschreiben bzw. alle Diagnosedaten zu jeder Zeit aufzuzeichnen (z.B. Mitschrieb aller jemals interessanter PLC Signalverläufe). Dies ist jedoch aufgrund der i.A. begrenzten Ressourcen (Speicherplatz, Rechenleistung, Übertragungsbandbreite, ...) in der technischen Einrichtung selbst nicht möglich.

Gemäß der Erfindung ist es nun möglich, dass bei Eintreten eines ggf. sehr komplexen Zustandes einer technischen Einrichtung, wobei der Zustand insbesondere den Zustand einer Maschine betrifft, die Überwachung der Einrichtung auf den speziellen Zustand angepasst werden kann. Der Zustand betrifft beispielsweise eine allgemeine Fehlermeldung aus der die Ursache des Fehlers nicht sofort ersichtlich ist. Mittels einer Softwarekomponente ist beispielsweise ein Zugriff auf verschiedene Datenquellen der der technischen Einrichtung möglich. Datenquellen sind z.B. Sensoren, Aktoren, Einrichtungen zur Steuerung und/oder Regelung und dergleichen.

In einer Ausgestaltung der Erfindung wird ein parametrierbarer PLC Baustein zur Überwachung von PLC Signalen in Echtzeit bzw. zyklusgenau verwendet. Damit in der PLC (Programmable Logic Control) zyklusgenau auf Signale reagiert werden kann, wird dort ein PLC Baustein hinterlegt. Dieser PLC Baustein führt die Überprüfung von Signalzuständen gemäß den Vorgaben aus der Konfigurationseinstellung, welche z.B. auf dem Webserver hinterlegt sind aus. Dieser Vorgang kann auf Scripten beruhen. Der Baustein realisiert somit in der PLC eine zur Laufzeit beliebig konfigurierbare Überwachungslogik von Signalzuständen. Durch die Ausführung der PLC Logik in einem frei konfigurierbaren PLC Baustein wird eine Erkennung von Signalzuständen taktgenau sichergestellt, ohne daß die genauen Verknüpfungen zum Erstellungszeitpunkt des Automatisierungsprojekte bekannt sein müssen.

Im Folgenden werden Beispiele für Änderungen der Überwachungskonfiguration für eine technische Einrichtung aufgelistet, wobei die Änderung der Konfiguration mittels der Einrichtung zur Überwachungsunterstützung zumindest mit initiiert wird:
- eine weitere Überwachungskonfigurationen ein-/ausschalten,
- weitere die technische Einrichtung in diesem Moment beschreibende Daten zu Diagnosezwecken an einen Webserver übertragen (z.B. Daten und Dateien aus einer PLC, einer NC, einer Benutzeroberfläche, einem HMI (Human Machine Interface) und/oder aus einem Betriebssystem bzw. Runtimesystem),
- auf dem Webserver die Versendung von Nachrichten über unterschiedliche Medien (z.B.: SMS, Email, usw.) anstoßen; gemäß der Erfindung ist allgemein das erfindungsgemäße Verfahren zur Überwachung folglich dahingehend erweiterbar, dass von der technischen Einrichtung und/oder von der Einrichtung zur Überwachungsunterstützung eine Meldung erzeugt wird, wonach durch die Meldung eine in der technischen Einrichtung und/oder in der Einrichtung zur Überwachungsunterstützung gespeicherte Funktion ausgelöst wird,
- die Abarbeitungslogik einer Einrichtung zur Steuerung und/oder Regelung der technischen Einrichtung über eine Kommunikationsverbindung zu dieser Einrichtung zur Steuerung und/oder Regelung beeinflussen,
- einen Anwender an der technischen Einrichtung, insbesondere an einem HMI einer Maschine, über eingetretene Ereignisse, Fehlerzustände über Meldungen auf dem HMI informieren
- die Erzeugung von Instandhaltungsaufträgen anstoßen.

Wie aus der obigen Aufstellung ersichtlich ist betrifft die Änderung der Überwachungskonfiguration insbesondere auch Aktionen die z.B. in Folge eines erkannten Fehlers durchzuführen, sind (z.B. Email an einen Bediener, Bestellung eines Ersatzteiles durch die technische Einrichtung selbst, ...). Durch das Zu-/Abschalten von Überwachungskonfigurationen beim Erkennen von Ereignissen bzw. Fehlerzuständen, ist es mit dem beschriebenen Verfahren möglich, Fehlerbäume aufzubauen. Vor allem bei wiederholt (und sporadisch) eintretenden Störungen können so Fehlerzustände eingekreist werden, ohne mehr Ressourcen der Steuerung zu verbrauchen.

Auch ein kaskadiertes Einschalten von Fehlerüberwachungen bzw. eine situationsabhängige Diagnose, bzw. eine situationsabhängige Datenbeschaffung ist durchführbar. Dies gelingt insbesondere durch das Einschalten/Ausschalten einer weiteren Überwachungskonfiguration und/oder durch das Ausschalten der eigenen detektierenden Überwachungsfunktionalität. Dadurch lässt sich eine Ressourceneinschränkung umgehen, da es hiermit möglich wird; basierend auf einem erkannten Fehler, diesen weiter einzugrenzen ("Drill-Down" anhand eines Fehlerbaums) ohne weitere Ressourcen auf der technischen Einrichtung und insbesondere auf einer Einrichtung zur Regelung und/oder Steuerung zu verbrauchen. Ein Überwachungskonfiguration kann dabei nach einem erkanntem Ereignis eine andere, noch besser geeignete ein- und sich selbst ausschalten. Dies ist vor allem für die Einkreisung immer wieder, jedoch sporadisch auftretender Fehler hilfreich.

Die Überwachung kann neben der Erkennung von Fehlern und kritischen Zuständen auch zur Erkennung weiterer Ereignisse herangezogen werden. Eine Verknüpfung zwischen Signalen zur Erkennung eines Ereignisses kann sowohl zwischen Signalen, die nur auf der Einrichtung zur Steuerung und/oder Regelung der technischen Einrichtung vorliegen, erfolgen, als auch mit solchen Signalen und Zuständen, die auf dem Webserver selbst, also der Einrichtung zur Überwachungsunterstützung, z.B. in Form von Instandhaltungsinformationen oder Maschinenkenngrößen vorliegen. Dazu schickt die technische Einrichtung z.B. durch eine Softwarekomponente entweder Teilinformationen über auf der Einrichtung zur Steuerung und/oder Regelung erkannte Signale an den Webserver, die dort mit weiteren Bedingungen zu einem Ereignis kombiniert werden oder sie hält lokal vom Webserver bereitgestellte Informationen vor, die z.B. in der Softwarekomponente selbst zu einem Ereignis kombiniert werden. Der letztgenannte Weg wird dann beschritten, falls es notwendig ist, sofort beim Eintreten eines Ereignisses und ohne die Antwortzeit des Webservers abwarten zu müssen, eine Aktion auf der technischen Einrichtung, also z.B. der Maschine z.B. einen PLC Datenabzug zu starten.

Gemäß des erfindungsgemäßen Verfahrens lässt sich ein verteiltes, zur Laufzeit konfigurierbares Überwachungssystem für eine technische Einrichtung realisieren, wobei:
- in Echtzeit sowohl auf reine Zustände in der technischen Einrichtung (insbesondere eine Einrichtung zur Steuerung und/oder Regelung), als auch auf Zustände aus anderen Systemen (über die Bereitstellung der Informationen aus dem Webserver, der als Einrichtung zur Überwachungsunterstützung dient) reagiert wird und/oder,
- auf Ereignisses hin, Diagnoseinformation zur Verfügung gestellt werden und/oder
- weiterführende Arbeitsprozesse (z.B. mittels Benachrichtigung an einen Anwender) angestoßen werden.

Die Änderung der Überwachungskonfiguration erfolgt insbesondere während des Betriebs der technischen Einrichtung ohne dass beispielsweise ein Produktionsprozess einer Maschine unterbrochen werden muss.

Das erfindungsgemäße Verfahren ist des weiteren derart ausbildbar, dass zumindest ein Teil der Überwachungskonfiguration in einer Konfigurationseinstellung zusammenfassbar ist, wobei eine und/oder mehrere Konfigurationseinstellungen in der technischen Einrichtung und/oder in der Einrichtung zur Überwachungsunterstützung gespeichert werden. Eine Überwachungskonfiguration wird durch ihre Speicherung zu einer Konfigurationseinstellung. Auf der Einrichtung zur Überwachungsunterstützung sind vorteilhafter Weise verschiedene Überwachungskonfigurationen gespeichert. Diese Überwachungskonfigurationen können dann mittels einer Kommunikationsverbindung zur technischen Einrichtung übertragen werden. Die Auswahl einer bestimmten Überwachungskonfiguration hängt insbesondere von einer aufgetretenen Fehlermeldung und/oder Warnmeldung ab. Dabei kann die Auswahl von der technischen Einrichtung selbst getroffen werden, so dass die technische Einrichtung von der Einrichtung zur Überwachungsunterstützung die richtige erforderliche Konfiguration anfordert. In einer weiteren Ausgestaltung des Verfahrens wird die Fehlermeldung und/oder die Warnmeldung an die Einrichtung zur Überwachungsunterstützung übertragen, wobei die Auswahl der Überwachungskonfiguration in der Einrichtung zur Überwachungsunterstützung getroffen wird. Diese Einrichtung zur Überwachungsunterstützung ist insbesondere als ein Webserver ausgeführt, wobei dieser einen Zugriff auf eine Datenbank mit unterschiedlichen Überwachungskonfigurationen aufweist.

In einem Ereignisfall werden z.B. Datenabzüge durchgeführt, sowie auch weitere Aktionen (z.B. das Versenden von Mitteilungen an einen Anwender), welche ebenfalls auf dem Webserver hinterlegt werden können, und zur Laufzeit der technischen Einrichtung beliebig angepasst werden können. Durch die Auslagerung verschiedener Konfigurationen für eine Überwachung auf die Einrichtung zur Überwachungsunterstützung, welche räumlich von der technischen Einrichtung entfernt aufgestellt ist, lassen sich Aktualisierungen der Konfigurationen wesentlich einfacher durchführen. Die Einrichtung zur Überwachungskonfiguration wird beispielsweise vom Hersteller der technischen Einrichtung betrieben, wobei die Einrichtung zur Überwachungskonfiguration mit der technischen Einrichtung über das Internet verbunden ist. Der Hersteller hat die Erfahrung mit der technischen Einrichtung und kann somit besser zu einer schnelleren Behebung von Fehlern beitragen.

Das Verfahren zur Überwachung ist auch derart ausgestaltbar, dass für die technische Einrichtung eine Konfigurationseinstellung aktiviert wird. Wird die Konfigurationseinstellung aktiviert ist also eine bestimmte vorab gespeicherte Überwachungskonfiguration aktiv geschaltet. Die Überwachungskonfiguration war vor der Aktivierung beispielsweise auf der technischen Einrichtung oder auch auf der Einrichtung zur Überwachungsunterstützung gespeichert.

In einer weiteren vorteilhaften Ausgestaltung erfolgt die Aktivierung der Konfigurationseinstellung automatisch durch eine bereits aktive Konfigurationseinstellung, also durch die aktive Überwachungskonfiguration. Diese Initiierung geht also von der technischen Einrichtung selbst aus. Die Aktivierung der Konfigurationseinstellung ist jedoch in einer weiteren Ausgestaltung durch die Einrichtung zur Überwachungsunterstützung initiierbar.

Neben der Aktivierung einer Konfigurationseinstellung ist auch eine Deaktivierung dieser durchführbar. Weiterhin sind auch vorteilhaft zumindest zwei Konfigurationseinstellungen aktivierbar, so dass sich eine kombinierte Überwachungskonfiguration **ergibt.**

**Ausführungsbeispiele** der Erfindung sind in der Zeichnung dargestellt und werden im folgenden erläutert. Dabei zeigt:
- FIG 1: eine Schemadarstellung eines **bei der Umsetzung der Erfindung verwendeten** Systems und
- FIG 2: schematisch dargestellte Verfahrensschritte zur Überwachung einer technischen Einrichtung

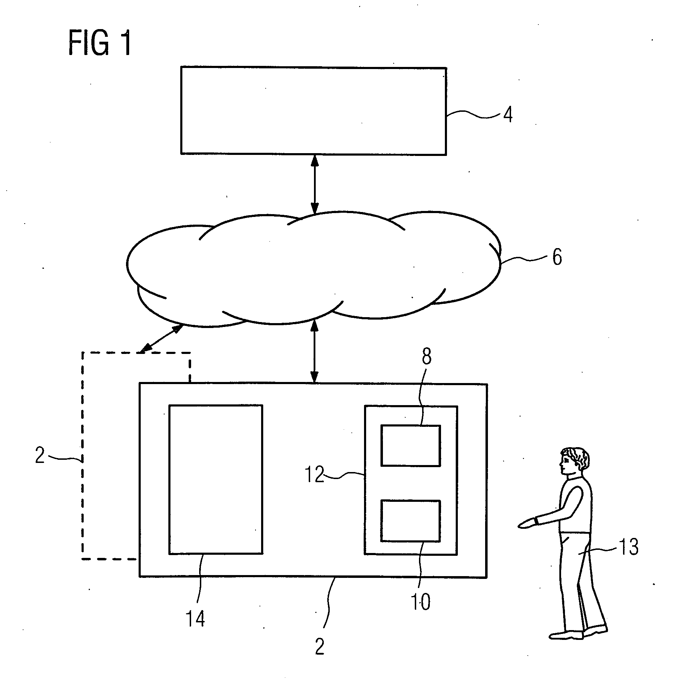

Die Darstellung gemäß FIG 1 zeigt beispielhaft eine Schemadarstellung eines **bei der Umsetzung der Erfindung verwendeten** Systems. Das System weist eine technische Einrichtung 2, eine Einrichtung 4 zur Überwachungsunterstützung und eine Kommunikationsverbindung 6 auf. Die Kommunikationsverbindung 6 ist beispielsweise eine:
- Netzwerkverbindung wie diese z.B. über das Internet oder ein Intranet oder ein LAN-Netz realisierbar ist
- bzw. auch eine Verbindung unter zu Hilfename einer Telekommunikationsverbindung.
   Die Einrichtung 4 zur Überwachungsunterstützung der technischen Einrichtung 2 ist beispielsweise ein Server.

Die technische Einrichtung 2 kann als so genannter Interactive Client, d.h. mit einer Eingabeeinheit 8 und Ausgabeeinheiten 10 für ein HMI 12 versehen, ausgebildet sein, damit ein Bediener 13 die Überwachung durch Eingaben steuern kann. Das HMI (Human Machine Interface) weist im vorliegenden Beispiel also eine Eingabeeinheit 8 (z.B. eine Tastatur) und eine Ausgabeeinheit 10 (z.B. ein Bildschirm) auf. Die technische Einrichtung 2 ist beispielsweise eine Werkzeugmaschine, wobei die Werkzeugmaschine eine Einrichtung 14 zur Steuerung und/oder Regelung aufweist. Die Einrichtung zur Überwachungsunterstützung 4 kann auch mehrere technische Einrichtungen 2, wie z. B. für mehrere Produktionsmaschinen genutzt werden.
Eine zweite technische Einrichtung 2 ist symbolisch strichliniert dargestellt, wobei auch diese über die Kommunikationsverbindung 6 mit der Einrichtung zur Überwachungsunterstützung 4 verbunden ist. Die Doppelpfeile zwischen den Einrichtungen deuten die Datenkommunikation an.

Die vorliegende Erfindung erlaubt es, für die technische Einrichtungen 2 bzw. für z. B. die Einrichtung zur Regelung und/oder Steuerung 14 als embedded Gerät, Dienste zur Überwachung der technischen Einrichtung oder auch zur Überwachung eines Gerätes bzw. einer Maschine für welche die technische Einrichtung vorgesehen ist über die Kommunikationsverbindung 6 anzubieten, wobei technische Eigenschaften (z. B. Daten und/oder Funktionen) dieser Geräte bzw. Maschinen benutzt werden. **Im Rahmen der Erfindung werden** über die Kommunikationsverbindung 6 von der Einrichtung 4 zur Überwachungsunterstützung Konfigurationseinstellungen für eine Überwachung auf die technischen Einrichtung 2 **geladen** und dort **ausgeführt.**

Im Bereich der industriellen Automatisierungstechnik und insbesondere auf dem Gebiet numerisch gesteuerter Bearbeitungsmaschinen bieten Hersteller Service in Form von Steuerungstechnologie und entsprechenden Softwarekomponenten oder embedded Geräten G für andere Hersteller von Originalzubehör (so genannte Original Equipment Manufacturer OEM) an, welche industrielle Bearbeitungsmaschinen herstellen und vermarkten.
Mit Hilfe der vorliegenden Erfindung ist es möglich, einem Endkunden, der von einem OEM z.B. eine Maschine erworben hat, eine verbesserte Überwachung der technischen Einrichtung 2 zur Verfügung zu stellen. Dadurch kann z.B. die Verfügbarkeit der Maschinen, deren Lebensdauer und ihre Produktivität entscheidend verbessert werden.

Die technische Einrichtung 2 nach FIG 1 ist insbesondere eine industrielle Maschine wie beispielsweise eine Werkzeugmaschine, eine Produktionsmaschinen oder ein Handhabungsautomat.
Derartige Maschinen weisen Mechanismen für die Erzeugung von Meldungen auf. Unter Meldungen sind z.B. Informationen bezüglich des Einschaltzustandes der industriellen Maschine oder anderer die industrielle Maschine betreffenden Parameter die ihren Zustand beschreiben wie beispielsweise Temperaturen, Betriebszeiten, Drücke oder Fehlermeldungen zu verstehen. Fehlermeldungen werden beispielsweise dann erzeugt, wenn die industrielle Maschine in einem von ihren normalen Betriebszustand abweichenden Zustand ist. Ursachen für Fehlermeldungen sind beispielsweise der Ausfall einer Komponente, die Störung von Bewegungsabläufen, das Überschreiten von Temperaturen, das Überschreiten von Drücken, das nicht Vorhandensein eines Betriebsmittels, das Überschreiten von elektrischen Strömen und elektrischen Spannungen oder beispielsweise auch der Verlust der Versorgungsspannung. Als Fehlermeldungen verstehen sich auch Alarmmeldungen. Alarmmeldungen sind Meldungen, welche beispielsweise einen kritischen Zustand bzw. einen möglicherweise bald auftretenden kritischen Zustand melden, welcher den Betrieb der industriellen Maschine einschränken kann, wie z.B. auch zur Neige gehende Rohstoffe für rohstoffverarbeitende industrielle Maschinen. Alarmmeldungen betreffen z.B. auch Betriebsstundenzahlen.

Industrielle Maschinen bestehen vielfach aus verschiedenen Komponenten. Viele Werkzeugmaschinen weisen beispielsweise elektrische Antriebe auf. Der elektrische Motor eines elektrischen Antriebs wird beispielsweise durch einen Umrichter gespeist. Sowohl der Motor als auch der Umrichter sind Komponenten und so ausführbar, dass diese Komponenten Meldungen erzeugen. Auch Komponenten können ihrerseits weitere Unterkomponenten aufweisen, welche die Eigenschaft aufweisen, selbst Fehlermeldungen zu erzeugen. Nur als Beispiel hierfür sind Umrichter zu nennen, welche einen Leistungsteil und einen Regelungsteil aufweisen.

Von einer industriellen Maschine oder von deren Komponenten werden Meldungen wie z.B. Fehlermeldungen erzeugt. Diese Meldungen werden einer Meldungsdiagnoseeinrichtung bereitgestellt. Die Bereitstellung erfolgt beispielsweise lokal bei der industriellen Maschine oder extern.

Bei einer externen Meldungsdiagnoseeinrichtung sind Einrichtungen zur Datenübertragung wie beispielsweise Telefonleitungen, Funkverbindungen z.B. über ein mobiles Telefon, Datennetze wie LAN oder WAN oder das Internet verwendbar. Bei lokalen Meldungsdiagnoseeinrichtungen erfolgt die Meldungsdiagnose beispielsweise vorteilhaft auf einer bereits bestehenden Einrichtung zur Datenverarbeitung, wie beispielsweise einer numerischen Steuerung, einer computernumerischen Steuerung oder einer speicherprogrammierbaren Steuerung. Zu den in der Meldungsdiagnoseeinrichtung eingegangenen Fehlermeldungen sind jeweils vorteilhaft dazugehörige Fehlerbeseitigungsmaßnahmen oder wenigstens eine Fehlerbeseitigungsmaßnahme gespeichert.

Eine zentrale Einrichtung zur Überwachungsunterstützung hat bei Systemen mit zumindest teilweise auftretenden Gleichteilen den Vorteil, dass eine Vergrößerung des Wissens, d.h., der Daten um Fehlerbehebungen zentral verbessert erfolgt.

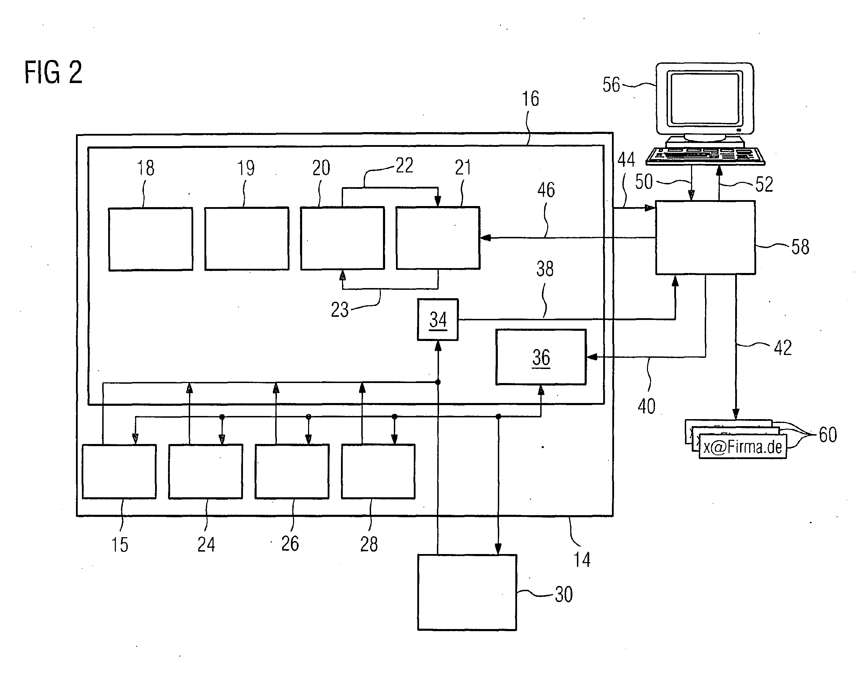

Die Darstellung gemäß FIG 2 zeigt eine Übersicht über eine mögliche Ausführungsform des erfindungsgemäßen Verfahrens, bzw. des erfindungsgemäßen Systems. Die Darstellung zeigt eine Einrichtung 14 zur Regelung und/oder Steuerung einer nicht dargestellten industriellen Maschine. Die Einrichtung 14 zur Regelung und/oder Steuerung weist eine Überwachungssoftware 16 auf. In der Einrichtung 14 zur Regelung und/oder Steuerung sind verschiedene Konfigurationseinstellungen 18, 19, 20 und 21 für die Überwachung der industriellen Maschine, welche eine technische Einrichtung ist, gespeichert. Die Überwachungssoftware 16 kann einen Datenaustausch mit weiteren Softwarekomponenten durchführen. Diese Softwarekomponenten betreffen beispielsweise PLC-Funktionen 15, Numerical-Control-Funktionen 24, Bedienfunktionen 26 und/oder Betriebssystemfunktionen 28. Ein Datenaustausch ist auch zu einer zusätzlichen technischen Einrichtung 30 möglich. Der Datenaustausch dient insbesondere einer Verknüpfung von Signalzuständen aus unterschiedlichen Quellen gemäß der gewählten bzw. aktiven Überwachungskonfiguration. Gesammelte Informationen und Daten aus unterschiedlichen Quellen können mit einer Zusatzfunktion 34 zu einem Webserver 58 übermittelt werden. Der Webserver 58 dient als Einrichtung zur Überwachungsunterstützung. Der Webserver 58 bedient verschiedenste Funktionen und Softwarekomponenten der Einrichtung zur Regelung und/oder Steuerung 14, wobei dies in der FIG 2 insbesondere mittels Pfeilen verdeutlicht ist. Mit Hilfe einer Funktion 36 lassen sich Informationen überlagern. Diese Informationen betreffen beispielsweise einen Instandhaltungszustand oder auch eine Maschinenkenngröße. Die Pfeile können die folgenden Funktionen repräsentieren:
- Die Funktion 40 zeigt an, dass der Webserver 58 Informationen zur Verknüpfung mit Steuerungszuständen bereitstellt;
- Die Funktion 42 zeigt an, dass der Webserver 58 weitere Aktionen gemäß einer vorgegebenen Aktion anstoßen kann, wobei eine Aktion 60 beispielsweise das Versenden von Emails betrifft;
- Die Funktion 38 zeigt ein Rückmeldung von Ereignissen und/oder gesammelten Daten an;
- Die Funktion 50 zeigt an, dass von einem Bediener mittels einer Bedienvorrichtung 56 eine Einstellung einer Überwachungskonfiguration erfolgen kann, wobei diese Einstellung in einer Konfigurationseinstellung gespeichert wird;
- Die Funktion 52 zeigt an, dass der Bediener Ereignisse und Diagnosedaten über die Bedienvorrichtung 56 auswerten kann;
- Die Funktion 44 zeigt an, dass die Überwachungssoftware 16 ein Anfrage an den Webserver 58 richtet, welche den Abruf einer Überwachungskonfiguration betrifft;
- Die Funktion 46 zeigt beispielsweise die Aktivierung oder Deaktivierung einer Konfiguration an, oder auch eine Rückmeldung von Ereignissen und/oder gesammelten Daten.

Das in der FIG 2 gezeigte Verfahren bzw. System weist also eine Softwarekomponente 16 zur Überwachung auf, die auf einer an ein Netzwerk angebundene Einrichtung zur Steuerung und/oder Regelung 14 installiert ist, und dort Signale auf das Erreichen bestimmter Signalwerte hin überwacht, und einen Webserver, der von der Softwarekomponente 16 auf der Einrichtung zur Steuerung und/oder Regelung 14 über das Eintreten einer bestimmten Kombination dieser Signalwerte - "Ereignis" - informiert wird. Vorteilhaft wird das Ereignis mit einem Zeitstempel versehen gespeichert und zu Diagnosezwecken bereitstellt. Die Überwachungskonfigurationen sind als Einstellungen auf dem Webserver hinterlegbar und können dort zur Laufzeit der Steuerung vom Bediener erstellt und angepasst werden. Sie werden von der Softwarekomponente 16 auf der Einrichtung zur Steuerung und/oder Regelung selbsttätig am Webserver 58 über eine Netzwerkverbindung z.B. in Form von Skripten in einer Skriptsprache abgeholt und in der Softwarekomponente 16 interpretiert. Dadurch wird eine zur Laufzeit ohne Anhalten der Einrichtung zur Steuerung und/oder Regelung bzw. des Produktionsprozesses frei konfigurierbare Überwachungslogik realisiert.

In der erfindungsgemäßen Ausführungsform nach FIG 2 weist die Überwachungssoftware vier Konfigurationseinstellungen 18, 19, 20 und 21 auf. Die Konfigurationseinstellungen 18, 19 und 20 sind aktiv geschaltet und bilden gemeinsam eine Überwachungskonfiguration. Die Konfigurationseinstellung 21 ist inaktiv.

In der Konfigurationseinstellung 18 ist beispielsweise die Überwachungsfunktion hinterlegt, dass bei Erfüllung der Bedingung "PLC-Signal1 = 1 UND NC-Signal=55,3" folgende Aktion zu starten ist: "PLC Datenwort 5 an Webserver schicken". Die Konfigurationseinstellung kann zusätzlich noch weitere Überwachungsfunktionen aufweisen.

In der Konfigurationseinstellung 19 ist beispielsweise die Überwachungsfunktion hinterlegt, dass bei Erfüllung der Bedingung "NC-Signal = Antrieb defekt UND Status Instandhaltungsaufträge = überfällige Aufträge" folgende Aktion zu starten ist: "Email an Instandhaltung schicken".

In der Konfigurationseinstellung 20 ist beispielsweise die Überwachungsfunktion hinterlegt, dass bei Erfüllung der Bedingung "NC-Alarm = Antrieb defekt folgende Aktion zu starten ist: "Konfigurationseinstellung 21 einschalten UND Konfigurationseinstellung 20 ausschalten". Vorteilhaft ist es also möglich, dass sich Konfigurationseinstellungen gegenseitig einschalten und/oder ausschalten können. Diese Funktion ist in der FIG 2 durch die Pfeile 22 und 23 dargestellt.

In der Konfigurationseinstellung 21 ist beispielsweise die Überwachungsfunktion hinterlegt, dass bei Erfüllung der Bedingung "NC-Alarm = Antrieb defekt, Sonderfall 1" folgende Aktion zu starten ist: "NC-Zustandsdaten an Server schicken UND Konfigurationseinstellung 20 einschalten UND Konfigurationseinstellung 21 ausschalten".

Die dargestellte Überwachung hat verschiedene vorteilhafte Funktionen:
- frei konfigurierbare Monitore im Sinne von Konfigurationseinstellungen und die Möglichkeit diese zu kaskadieren,
- Skripte, welche der Auswertung in einem Maschinenhandler dienen, wobei dies sowohl ein Verknüpfungshandling wie auch eine Auswertelogik betreffen kann,
- frei konfigurierbarer Echtzeit PLC Bausteine, wobei deren Verhalten bzw. Funktion parametrierbar ist.

Mit dem beschriebenen System ist es möglich, im Nachhinein erkannten Fehlerzustände und dafür notwendige Reaktionen über das System nachzupflegen, so daß sie für den Anwender/Bediener der Anlage transparent gegenüber den a priori im Automatisierungsprojekt festgelegten erscheinen. Dies bedeutet für Maschinenhersteller/-betreiber insbesondere im Bereich von Sondermaschinen einen Zeit/Produktivitätsgewinn, da hier zum Inbetriebnahmezeitpunkt nicht alle möglichen Störfälle bekannt sind und diese beim Auftreten an der Anlage nachgepflegt werden müssen, was i.A. immer eine Stillsetzung der Anlage erfordert.

Durch das beschriebene System wird es für Maschinenhersteller und -betreiber möglich, sporadisch auftretende Störungen, die zum Inbetriebnahmezeitpunkt einer Anlage, welche eine technische Einrichtung ist, noch nicht bekannt waren, an der Anlage zu erkennen:
- ohne dedizierte Diagnosehardware hinzufügen zu müssen und
- ohne den Produktionsprozess zu unterbrechen.

Durch die Verwendung einer per Skripten im Verhalten frei konfigurierbaren Softwarekomponente wird es möglich:
- Verknüpfungen von beliebigen Signalen aus der Einrichtung zur Steuerung und/oder Regelung im Nachhinein als Ereignis zu definieren und auf diese zu reagieren
- datenerzeugende Aktionen auf der Einrichtung zur Steuerung und/oder Regelung auszuführen; der genaue Art Anhalt der zu erzeugenden Daten muss dabei zum Erstellungszeitpunkt des Automatisierungsprojekts nicht bekannt sein.

## Patentansprüche

1. Verfahren zur Überwachung einer technischen Einrichtung (2), wobei eine Kommunikationsverbindung (6) zwischen der technischen Einrichtung (2) und einer Einrichtung zur Überwachungsunterstützung (4) hergestellt wird, wobei mittels der Kommunikationsverbindung (6) eine Datenkommunikation mit der Einrichtung zur Überwachungsunterstützung (4) erfolgt, wobei die Überwachung der technische Einrichtung (2) konfigurierbar ist, und wobei Änderungen einer Überwachungskonfiguration von der Einrichtung zur Überwachungsunterstützung (4) an die technische Einrichtung (2) übertragen werden, **dadurch gekennzeichnet, dass** zumindest ein Teil der Öberwachungskonfiguration in einer Konfigurationseinstellung (18,19,20,21) zusammenfassbar ist, wobei eine und/oder mehrere Konfigurationseinstellungen (18,19,20,21) in der technischen Einrichtung (2) und/oder in der Einrichtung zur Überwachungsunterstützung (4) gespeichert werden, und dass die Einrichtung zur Überwachungsunterstützung (4) in einer seriellen und/oder parallelen Reihenfolge mit zwei oder mehreren technischen Einrichtungen (2) zur Ausführung einer Datenkommunikation verbunden ist, wobei die Konfigurationseinstellung (18,29,20,21) einer ersten technischen Einrichtung (2) abhängig von einem Zustand einer zweiten technischen Einrichtung (2) gewechselt wird.

2. Verfahren nach Anspruch 1, **dadurch gekennzeichnet, dass** die Änderung der Überwachungskonfiguration während des Betriebs der technischen Einrichtung (2) durchgeführt wird.

3. Verfahren nach einem der Ansprüche 1 oder 2, **da durch gekennzeichnet** , dass für die technische Einrichtung eine Konfigurationseinstellung (18,19,20,21) aktiviert wird.

4. Verfahren nach Anspruch 3, **dadurch gekennzeichnet, dass** die Aktivierung der Konfigurations einstellung (18,19,20,21) durch eine bereits aktive Konfigurationseinstellung (18,19,20,21) initiiert wird und/oder dass die Aktivierung der Konfigurationseinstellung (18,19,20,21) durch die Einrichtung zur Überwachungsunterstützung (4) initiiert wird.

5. Verfahren nach einem der Ansprüche 1 bis 3, **dadurch gekennzeichnet , dass** für die technische Einrichtung (2) eine Konfigurationseinstellung (18,19,20,21) deaktiviert wird.

6. Verfahren nach einem der Ansprüche 1 bis 5, **dadurch gekennzeichnet , dass** von der technischen Einrichtung (2) und/oder von der Einrichtung zur Überwachungsunterstützung (4) eine Meldung erzeugt wird, wonach durch die Meldung eine in der technischen Einrichtung (2) und/oder in der Einrichtung zur Überwachungsunterstützung (4) gespeicherte Funktion ausgelöst wird.

## Claims

1. Method for monitoring a technical appliance (2), wherein a communication link (6) between the technical appliance (2) and a monitoring support appliance (4) is established, with a data communication with the monitoring support appliance (4) taking place by means of the communication link (6), with the monitoring of the technical appliance (2) being configurable, and with changes to a monitoring configuration being transferred by the monitoring support appliance (4) to the technical appliance (2)
**characterised in that**
at least a part of the monitoring configuration can be consolidated in a configuration setting (18,19,20,21), with one and/or more configuration settings (18,19,20,21) being stored in the technical appliance (2) and/or in the monitoring support appliance (4) and that the monitoring support appliance (4) is connected to two or more technical appliances (2) in a serial and/or parallel sequence for the purpose of carrying out a data communication, wherein the configuration setting (18,19,20,21) of a first technical appliance (2) is switched over as a function of a status of a second technical appliance (2).

2. Method according to claim 1,
**characterised in that**
the change to the monitoring configuration is carried out during operation of the technical appliance (2).

3. Method according to one of claims 1 or 2,
**characterised in that**
a configuration setting (18,19,20,21) is activated for the technical appliance.

4. Method according to claim 3,
**characterised in that**
the activation of the configuration setting (18,19,20,21) is initiated by an already active configuration setting (18,19,20,21) and/or that the activation of the configuration setting (18,19,20,21) is initiated by the monitoring support appliance (4).

5. Method according to one of claims 1 to 3,
**characterised in that**
a configuration setting (18,19,20,21) is deactivated for the technical appliance (2).

6. Method according to one of claims 1 to 5,
**characterised in that**
a message is generated by the technical appliance (2) and/or by the monitoring support appliance (4), whereby a function stored in the technical appliance (2) and/or in the monitoring support appliance (4) is initiated by means of the message.

## Revendications

1. Procédé de contrôle d'un dispositif ( 2 ) technique, dans lequel on établit une liaison ( 6 ) de communication entre le dispositif ( 2 ) technique et un dispositif de facilitation ( 4 ) du contrôle, dans lequel on effectue au moyen de la liaison ( 6 ) de communication une communication de données avec le dispositif de facilitation ( 4 ) du contrôle, le contrôle du dispositif ( 2 ) technique pouvant être configuré, et dans lequel on transmet au dispositif ( 2 ) technique des modifications d'une configuration de contrôle par le dispositif de facilitation ( 4 ) du contrôle, **caractérisé en ce qu'**au moins une partie de la configuration de contrôle peut être rassemblée en un réglage ( 18, 19, 20, 21 ) de configuration, un et/ou plusieurs réglages ( 18, 19, 20, 21 ) de configuration étant mémorisés dans le dispositif ( 2 ) technique et/ou dans le dispositif de facilitation ( 4 ) du contrôle, et **en ce que** le dispositif de facilitation ( 4 ) du contrôle est relié dans une succession en série et/ou en parallèle à deux ou à plusieurs dispositifs ( 2 ) techniques pour l'exécution d'une communication de données, le réglage ( 18, 19, 20, 21 ) de configuration d'un premier dispositif ( 2 ) technique étant modifié en fonction d'un état d'un deuxième dispositif ( 2 ) technique.

2. Procédé suivant la revendication 1, **caractérisé en ce que** l'on effectue la modification de la configuration du contrôle pendant le fonctionnement du dispositif ( 2 ) technique.

3. Procédé suivant la revendication 1 ou 2, **caractérisé en ce que** l'on active pour le dispositif technique un réglage ( 18, 19, 20, 21 ) de configuration.

4. Procédé suivant la revendication 3, **caractérisé en ce que** l'on lance l'activation du réglage ( 18, 19, 20, 21 ) de configuration par un réglage ( 18, 19, 20, 21 ) de configuration déjà actif et/ou **en ce que** l'on lance l'activation du réglage ( 18, 19, 20, 21 ) de configuration par le dispositif de facilitation ( 4 ) du contrôle.

5. Procédé suivant l'une des revendications 1 à 3, **caractérisé en ce que** l'on désactive un réglage ( 18, 19, 20, 21 ) de configuration par le dispositif ( 2 ) technique.

6. Procédé suivant l'une des revendications 1 à 5, **caractérisé en ce que** l'on produit par le dispositif ( 2 ) technique et/ou par le dispositif de facilitation ( 4 ) de contrôle un message en déclenchant par le message une fonction mémorisée dans le dispositif ( 2 ) technique et/ou dans le dispositif de facilitation ( 4 ) du contrôle.
